# NEUE EUROPÄISCHE PATENTSCHRIFT

(11) **EP 0 958 646 B2**
(45) Veröffentlichungstag und Bekanntmachung des Hinweises auf die Entscheidung über den Einspruch: **15.02.2012**
(45) Hinweis auf die Patenterteilung: 28.04.2004
(21) Anmeldenummer: 98905360.8
(22) Anmeldetag: 28.01.1998
(51) Int. Cl.: H02K 11/04

(54) **ELEKTROMOTOR MIT VORGESCHALTETEM FREQUENZUMRICHTER**
ELECTRIC MOTOR WITH AN UPSTREAM FREQUENCY CONVERTER
MOTEUR ELECTRIQUE A CONVERTISSEUR DE FREQUENCE MONTE EN AMONT

(30) Priorität: 05.02.1997 DE 19704226
(43) Veröffentlichungstag der Anmeldung: 24.11.1999
(60) Teilanmeldung: 04002173.5
(73) Patentinhaber: SEW-EURODRIVE GmbH & Co. KG, 76646 Bruchsal (DE)
(72) Erfinder: ROTH STIELOW, Jörg, D-75015 Bretten (DE); SCHMIDT, Josef, D-76676 Graben-Neudorf (DE)
(74) Vertreter: Bohnenberger, Johannes
(86) Internationale Anmeldenummer: PCT/EP1998/000445
(87) Internationale Veröffentlichungsnummer: WO 1998/035424

(56) Entgegenhaltungen:
- EP-A- 0 456 169
- DE-A- 3 203 512
- DE-A- 3 602 606
- DE-B- 1 220 042
- DE-U- 9 415 935
- US-A- 4 727 274
- SIEMENS ZEITSCHRIFT "DRIVE & CONTROL - PRODUKTE UND SYSTEME FÜR DIE INDUSTRIE" Nr. 3/95, September 1995, Seite 1,3,20,21

## Beschreibung

Die Erfindung betrifft einen Elektromotor.

Unter einem Umrichter wird ein Umformer verstanden, welcher die Netzspannung mit konstanter Frequenz und Spannung in ein Drehspannungssystem mit variabler Frequenz und variabler Spannung überführt. Dieses Drehspannungssystem wird dem anzutreibenden Drehstrommotor (Asynchronmaschine) zugeführt, um so die Drehzahl des Elektromotors durch entsprechende Wahl der Ausgangsfrequenz des Umrichters vorzugeben.

Im Gegensatz zur herkömmlichen Anordnung, bei der der Umrichter als separate Einheit in einem Schaltschrank angeordnet ist und über eine Motorzuleitung von bis zu 100 m Länge den Elektromotor speist, sind bereits Elektromotoren bekannt, bei denen die den Elektromotor steuernde Signal- und Leistungselektronik in den Elektromotor als mechanische Einheit integriert ist. Hierdurch soll dann der vorher erforderliche Schaltschrankplatzbedarf eingespart werden und außerdem eine Verringerung der EMV-Problematik erfolgen, welche bei der herkömmlichen Anordnung durch Abstrahlung aufgrund der langen Motorzuleitungen von bis zu 100 m Länge verursacht wird. Zur Integration des Frequenzumrichters in den Elektromotor ist dabei zum einen vorgesehen, dessen Elektronik in einen der Klemmenkästen des Elektromotors einzubauen. Die Anschlußelemente wie Klemmen und/oder Stecker für Versorgungs- und Signalleitungen sind auch weiterhin innerhalb des Klemmenkastens angeordnet. Eine solche Anordnung, bei der Frequenzumrichter und Elektromotor baulich miteinander verbunden sind, hat insbesondere im Hinblick auf die Fertigungstechnik und die damit verbundenen Herstellungskosten zahlreiche Vorteile. Probleme jedoch bereitet die Kühlung des Frequenzumrichters, da insbesondere die Leistungsendstufe der Leistungselektronik hohe Verlustwärme erzeugt. Um diese Verlustwärme des Frequenzumrichters abzuleiten, muß an den Elektromotor B-seitig (die B-Seite ist die dem abtreibenden Motorwellenende abgewandte Seite) eine separate Sonderlüfterhaube mit Lüfter angebaut werden, wobei dieser Lüfter durch den Elektromotor selber oder aber durch einen zusätzlichen separaten Lüftermotor angetrieben wird.

Anstelle der Integration des Frequenzumrichters im Klemmenkasten kann das Gehäuse des Frequenzumrichters auch B-seitig an den Elektromotor angebaut werden. Auch hier muß zur Ableitung der Verlustwärme des Frequenzumrichters B-seitig an den Elektromotor ein Lüfter angebaut werden, welcher auch hier durch den Elektromotor selbst oder aber einen separaten Lüftermotor angetrieben wird. Bei dieser Variante sind dann lediglich die Anschlußelemente wie Klemmen und/oder Stecker für Versorgungs- und Signalleitungen in einem oder mehreren Klemmenkästen untergebracht, so daß diese ihre Standardgröße beibehalten. Jedoch wird durch den Einbau der Elektronik an das B-seitige Ende des Elektromotors nun die Baulänge des Elektromotors vergrößert. Eine weitere Vergrößerung der Baulänge erfolgt durch die notwendige Sonderlüfterhaube. Wenn kein Lüfter vorgesehen wird, muß die Elektronik für hohe Temperaturen ausgelegt sein, es können also spezielle hochtemperaturbeständige elektronische Bauelemente eingesetzt werden.

Aufgrund der beschriebenen Sonderteile bei Integration des Umrichters im Elektromotor kann kein einfacher Standardmotor verwendet werden. Es sind zur Anbringung von Frequenzumrichter sowie Sonderlüfterhaube und ggf. Lüftermotor Sonderkonstruktionen am Elektromotor notwendig. Außer dem durch den zusätzlichen Lüfter verursachten Platzbedarf treten hier noch zusätzlich störende Lüftergeräusche auf, und der Energieaufwand für den Lüfter als aktives Kühlelement ist äußerst hoch. Der für den Lüfter notwendige separate Motor stellt außerdem ein teures Bauteil dar.

Die DE 94 15 935 U1 zeigt einen Elektromotor eines Pumpenaggregats mit einem metallischen Klemmkasten mit darin befindlicher Elektronik, wobei im Boden des Klemmkastens sowie dazu fluchtend im Motorgehäuse je eine Ausnehmung angeordnet sind, durch die eine Steckverbindung geführt ist, welche die elektrischen Anschlüsse des Motors zum Klemmenkasten bildet. Weiterhin ist dieser durch einen zwischen seinem Boden und dem Motorgehäuse angeordnete Kunststoffplatte elektrisch und thermisch isoliert, wozu die an sich zylindrische Kontur des Motorgehäuses zu einer planen Anschlußfläche für den Klemmenkasten abgeflacht sein muß. Der Klemmenkasten weist eine bodenparallel erstreckende Platine auf, welche wärmeabgebende Leistungselektronik trägt, die wärmeleitend mit den Seitenwänden des Klemmenkastens verbunden sein kann und senkrecht zu dieser steht die vom Gehäuse mit Anschlußkontakten herausragende wärmeempfindliche Elektronik tragende Platine. Nachteilig ist, daß sowohl keine wirksame Wärmeabfuhr der Leistungselektronik und auch keine hinreichende Entkopplung zwischen empfindlicher Leistungselektronik gegeben ist, da letztere zum Teil unmittelbar neben der die wärmeempfindliche Elektronik tragende Platine angeordnet ist.

Die DE-AS 12 20 042 zeigt einen Motor mit einem in einem Gehäuse untergebrachten, aus mehreren Ventilen (Gleichrichtern) bestehenden Gleichrichteraggregat, wobei die Ventile auf in hohlrippendes Gehäuses ragenden Kühlplatten angeordnet und von einer Vergußmasse umschlossen sind. Die Druckschrift zeigt damit eine Möglichkeit zur Kühlung eines in einem Klemmenkasten angebrachten Gleichrichteraggregats.

Die EP 456 169 A1 betrifft einen Frequenzumrichter gespeisten Elektromotor mit einem Motorgehäuse und daran angeordneten Klemmenkasten, wobei der Frequenzumrichter eine bauliche Einheit mit dem Motor bildet und sein Leistungsteil im Klemmenkasten angeordnet ist. Die innerhalb des Leistungsteils entstehende Wärme wird durch eine Gehäusedurchbrechung an der Unterseite des Klemmenkastens über einen mit Kühlrippen versehenen Wärmeteiler in einen dem durch den Ventilator des Motors ausgesetzten Bereich geleitet und damit gekühlt. Die Druckschrift zeigt daher eine alternative Möglichkeit zur Kühlung der in Leistungselektronik entstehender Abwärme.

Der Erfindung liegt die Aufgabe zugrunde einen Elektromotor zu schaffen, bei dem der Frequenzumrichter einfach und kostengünstig ohne aufwendige Sonderteile am Elektromotor integriert werden kann und eine elektrotechnische Entkopplung der Signalelektronik von Motor und Leistungsendstufe als Wärmequellen gegeben ist.

Erfindungsgemäß wird die genannte Aufgabe durch einen Elektromotor mit einem Frequenzumrichter zur Drehzahlsteuerung nach Anspruch 1 gelöst, bei dem ein Gehäuse des Frequenzumrichters mit einem Kühlkörper versehen ist und das Gehäuse des Frequenzumrichters zum Elektromotor über ein Anschlußelemente aufnehmendes, einen Klemmenkasten ersetzendes Zwischenteil thermisch entkoppelt angebracht ist, wobei die Signalelektronik des Frequenzumrichters oberhalb des Zwischenteils und die Leistungselektronik auf dem Kühlkörper im Gehäuse angeordnet sind, so daß die Leistungselektronik wärmeleitend mit dem Kühlkörper gekoppelt ist.

Herkömmliche Elektromotoren sind mit einem Klemmenkasten bzw. Anschlußstellen für einen solchen versehen. Beim erfindungsgemäßen Elektromotor mit integriertem Frequenzumrichter nach Anspruch 1 erfolgt der Anschluß des Frequenzumrichters über ein den Klemmenkasten ersetzendes Zwischenteil; hierdurch sind das Gehäuse des Frequenzumrichters und das Gehäuse des Zwischenteils voneinander getrennt. Ein derartiger Frequenzumrichter kann daher auch mittels des Zwischenteils an einem herkömmlichen Elektromotor angebaut werden, da nun die zusätzlichen Bauteile, wie Lüfter und separater Lüftermotor, entfallen. Die Kühlung und damit die Abfuhr der Verlustwärme erfolgt nun mittels eines am Gehäuse des Frequenzumrichters vorgesehenen Kühlkörpers. Es ist also nicht mehr die gesamte Motorbaueinheit zum Zwecke der Kühlung des Frequenzumrichters, insbesondere der Verlustwärme der Leistungsendstufe, durch Sonderkonstruktionen anzupassen, sondern es sind lediglich entsprechende Maßnahmen am Gehäuse des Frequenzumrichters selbst vorzunehmen, beispielsweise die Anpassung der wirksamen Kühlfläche des Kühlkörpers an die Leistungselektronik.

Übliche B-seitige Anbauten von Motoren wie z.B. Lüfter, Geber, Bremsen und/oder Kombinationen hieraus können damit ohne Einschränkungen angebaut werden. Der Frequenzumrichter ist aufgrund der erfindungsgemäßen Ausgestaltung nicht auf einen zusätzlichen Lüfter oder eine besondere Ausführungsform des Lüfters bzw. der Lüfterhaube angewiesen. Die Anschlußelemente wie Klemmen und/oder Stecker für Versorgungs- und Signalleitungen sind nun im Zwischenteil untergebracht und können einfach nach der Demontage des Gehäuses des Frequenzumrichters erreicht werden. Um den Bauraumbedarf für den Elektromotor mit integriertem Frequenzumrichter nicht unnötig zu vergrößern, ist erfindungsgemäß vorgesehen, daß das Gehäuse des Frequenzumrichters das Zwischenteil in Längsrichtung überragt und der Kühlkörper unterhalb des Gehäuses seitlich des Zwischenteils angeordnet ist. Dabei sind die Signalelektronik des Frequenzumrichters oberhalb des Zwischenteils und die Leistungselektronik oberhalb des Kühlkörpers im Gehäuse angeordnet. Auf diese Weise kann dann die von der Leistungselektronik, insbesondere deren Leistungsendstufe, stammende Verlustwärme direkt durch Wärmeleitung an den Kühlkörper weitergegeben wird. Aufgrund der dadurch möglichen Temperaturverhältnisse im Gehäuse des Frequenzumrichters kann dieses im Bereich der Signalelektronik, welche äußerst empfindlich ist, möglichst kühl gehalten werden. Bei den aus dem Stand der Technik bekannten Elektromotoren mit integriertem Frequenzumrichter sind alle Teile gleichwarm, da sie durch das Aufschrauben und Verwenden von Aluminiumlegierungen für das Gehäuse des Frequenzumrichters thermisch gut gekoppelt sind.

Um den Kühlkörper mit der Leistungsendstufe des Frequenzumrichters thermisch gut zu koppeln und damit die Verlustwärme der Leistungsendstufe abzuleiten, ist der Kühlkörper vorzugsweise aus einem Material hoher thermischer Leitfähigkeit. Entsprechend können dann die Leistungshalbleiter der Leistungsendstufe sehr hoch ausgenutzt werden, ohne daß die Signalelektronik Schaden nimmt. Auch kann der Kühlkörper hinsichtlich seines Volumens und seiner wirksamen Kühlfläche sehr kompakt ausgeführt werden. In Weiterbildung ist vorgesehen, daß auch das Gehäuse des Frequenzumrichters aus einem Material hoher thermischer Leitfähigkeit besteht. Entsprechend erfolgt dann die Ableitung der Verlustwärme des integrierten Frequenzumrichters zum einen über die Oberfläche des Gehäuses des Frequenzumrichters, zum anderen über den Kühlkörper und schließlich mittels natürlicher Konvektion und Abstrahlung. Insbesondere kann hierdurch jene Verlustwärme des Frequenzumrichters, welche nicht über den Kühlkörper abführbar ist, effizient über das Gehäuse des Frequenzumrichters an die Umgebungsluft abgegeben werden.

Der Kühlkörper selbst kann zur Vergrößerung seiner Oberfläche durch eine Vielzahl von Kühlrippen oder aber Kühlstäben gebildet sein.

Um den Elektromotor schnell und einfach mit dem jeweils den Einsatzbedingungen angepaßten Frequenzumrichter versehen zu können, ist es zweckmäßig, eine lösbare Verbindung zwischen dem Frequenzumrichter und dem Elektromotor vorzusehen, so daß jeweils einander zuzuordnende Einheiten in einfacher Weise, beispielsweise durch eine Steckverbindung, leitungsverbunden werden können, ohne daß hierzu besondere Fachkenntnisse erforderlich sind. Der Frequenzumrichter muß lediglich durch Lösen der Verbindung vom Motor demontiert bzw. am Motor montiert werden.

In Weiterbildung sind im Zwischenteil Einrichtungen zur Funkentstörung eingebaut. Auf diese Weise sind keine zusätzlichen externen Einrichtungen zu diesem Zweck notwendig.

Beim erfindungsgemässen Elektromotor wird die thermische Entkopplung zwischen Frequenzumrichter und Elektromotor dadurch erhalten, daß zwischen dem Gehäuse des Frequenzumrichters und dem Kühlkörper und/oder dem Zwischenteil zumindest eine Wärmesperre vorgesehen ist. Eine Wärmesperre zwischen Gehäuse und Kühlkörper reduziert einerseits den direkten Wärmetransport vom Kühlkörper zum Gehäuse des Frequenzumrichters und andererseits auch den indirekten Wärmetransport durch Verminderung der Luftzirkulation im Inneren zwischen dem Kühlkörper und dem Gehäuse des Frequenzumrichters. Ist die Wärmesperre zwischen dem Gehäuse des Frequenzumrichters und dem Zwischenteil vorgesehen, so reduziert sie einerseits den direkten Wärmetransport vom Stator des Motors über das Zwischenteil zum Gehäuse des Frequenzumrichters und andererseits auch den indirekten Wärmetransport durch Verminderung der Luftzirkulation im Inneren zwischen dem Zwischenteil und dem Gehäuse des Frequenzumrichters. In bevorzugter Ausgestaltung sind dabei separate Wärmesperren zwischen dem Gehäuse des Frequenzumrichters und dem Kühlkörper einerseits und dem Zwischenteil andererseits vorgesehen. Entsprechend können die Wärmesperren dann auch aus einem unterschiedlichen Material geringer thermischer Leitfähigkeit ausgeführt sein. Auch ist es von Vorteil, wenn die Wärmesperren den gesamten Anlagebereich zwischen Gehäuse des Frequenzumrichters und Zwischenteil bzw. Kühlkörper flächig abdecken.

In anderer bevorzugter Ausgestaltung ist zwischen dem Gehäuse des Frequenzumrichters und dem Kühlkörper und/oder dem Zwischenteil zumindest eine Feuchtigkeitssperre vorgesehen. Hierdurch wird der Austausch von Feuchtigkeit zwischen dem Zwischenteil und dem Frequenzumrichter sowie dem Frequenzumrichter und dem Kühlkörper vermindert.

Vorzugsweise bilden dabei die Wärmesperren und Feuchtigkeitssperren eine Funktionseinheit. Entsprechend kann so durch die Wärmesperren der Austausch von Feuchtigkeit zwischen der einen Seite der Wärmesperre und deren anderer Seite im gesamten Erstreckungsbereich zuverlässig vermindert werden.

Anstelle separater Wärmesperren oder aber zusätzlich zu den Wärmesperren ist es möglich, das Zwischenteil aus einem Material geringer thermischer Leitfähigkeit zu fertigen. Auf diese Weise wird nun die Funktion der Wärmesperre vom Zwischenteil übernommen oder aber der Wärmetransport weiter reduziert. Es ist auch möglich, das Gehäuse des Frequenzumrichters als Feuchtigkeitssperre auszubilden, so daß hierdurch der Austausch von Feuchtigkeit zwischen dem Zwischenteil und dem Frequenzumrichter vermindert wird.

Um das Gehäuse des Frequenzumrichters auch nach außen hin abzuschließen, so daß der Einsatz weitgehend unabhängig von örtlichen Gegebenenheiten, wie beispielsweise staubhaltiger Atmosphäre etc., ist, umgeben die Wärme- und/oder Feuchtigkeitssperren das Gehäuse des Frequenzumrichters vorzugsweise dichtend. Durch diese multifunktionale Ausprägung kann besonders kostengünstig eine hohe Schutzart gegenüber von außen eindringenden Flüssigkeiten und/oder Staub erreicht werden.

Ein besonders kostengünstiger und einfach zu demontierender bzw. montierender Aufbau läßt sich erreichen, wenn das Gehäuse des Frequenzumrichters in Form eines Deckteils ausgebildet ist, welches auf das Zwischenteil als Unterteil dieses verschließend aufsetzbar ist. So ist ein einfacher Austausch der Frequenzumrichter einerseits möglich, und zum anderen kann das Zwischenteil als einfacher Klemmenkasten nach Abnahme und Aufsetzen eines anderen Deckels genutzt werden.

Weitere Vorteile und Merkmale der Erfindung ergeben sich aus den Ansprüchen und aus der nachfolgenden Beschreibung, in der Ausführungsbeispiele unter Bezugnahme auf die Zeichnung im einzelnen erläutert werden. Dabei zeigt:
- Fig. 1: eine Seitenansicht eines erfindungsgemäßen Elektromotors mit einem integrierten Frequenzumrichter in einer ersten Ausführungsform;
- Fig. 2: einen Querschnitt durch den Frequenzumrichter aus Fig. 1;
- Fig. 3: einen erfindungsgemäßen Elektromotor mit integriertem Frequenzumrichter in einer zweiten Ausführungsform; und
- Fig. 4: in perspektivischer Darstellung einen vom Zwischenteil gelösten Frequenzumrichter sowie das Zwischenteil.

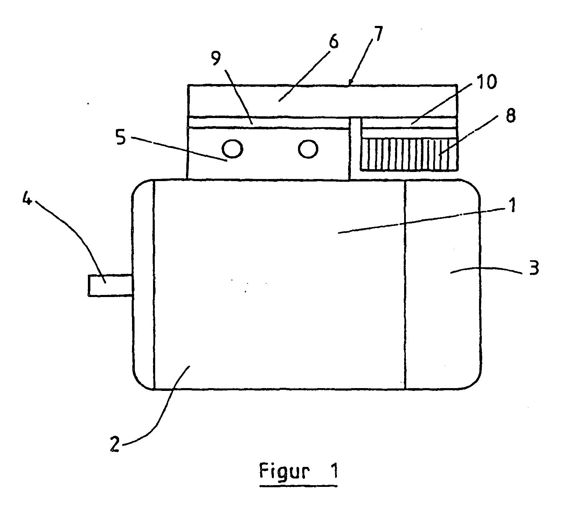

Fig. 1 zeigt in einer ersten Ausführungsform einen geschlossenen, oberflächen-gekühlten Elektromotor 1, der in seinem Inneren auf bekannte Weise mit einem Ständer (Stator) sowie einem Läufer versehen ist. Das Gehäuse 2 weist dabei auf der Außenseite mehrere seine Oberfläche vergrößernde Kühlrippen auf, um eine bessere Wärmeabgabe zu erzielen. B-seitig ist innerhalb einer Lüfterhaube 3 zur Belüftung des Elektromotors ein Lüfter angeordnet. An der A-Seite ist das abtreibende Motorwellenende 4 angeordnet.

An der Außenseite des Gehäuses 2 ist zwischen der A-Seite sowie der B-Seite des Elektromotors 1 ein Zwischenteil 5 angeordnet, welches den dort ansonsten vorgesehenen Klemmenkasten ersetzt und daher Anschlußelemente wie Klemmen und/oder Stecker für Versorgungs- und Signalleitungen aufweist. Das Zwischenteil 5 kann aus einem Material geringer thermischer Leitfähigkeit bestehen. An der dem Gehäuse 2 des Elektromotors 1 abgewandten Oberseite des an den Stator des Elektromotors 1 angebauten Zwischenteils 5 ist ein Gehäuse 6 eines Frequenzumrichters 7 vorgesehen, welches in Form eines Deckteils auf die Oberseite des Zwischenteils 5 dieses verschließend montiert ist. Das Gehäuse 6 überragt das Zwischenteil 5 seitlich in Richtung des B-seitigen Endes des Elektromotors 1 und weist an seiner freien Unterseite einen Kühlkörper 8 auf, der im dargestellten Ausführungsbeispiel durch Kühlrippen gebildet wird. Zwischen dem Zwischenteil 5 und dem Gehäuse 6 des Frequenzumrichters 7 ist eine flächige Wärmesperre 9, Gehäuse 6 und Zwischenteil 5 gegeneinander abdichtend, vorgesehen. Gleichermaßen ist zwischen dem Gehäuse 6 und dem Kühlkörper 8 eine weitere separate Wärmesperre 10 vorgesehen. Diese Wärmesperren 9 und 10 können dabei gleichzeitig auch als Feuchtigkeitssperren ausgebildet sein. Es ist auch möglich, zusätzliche Feuchtigkeitssperren vorzusehen. Die beiden Wärmesperren 9 und 10 bestehen vorzugsweise aus einem Material geringer thermischer Leitfähigkeit und sind flächenhaft ausgebildet.

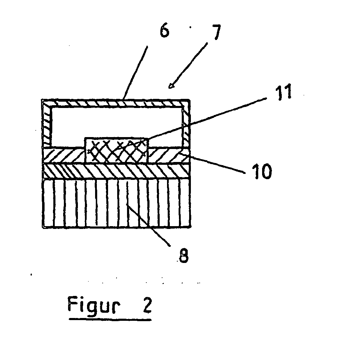

Wie Fig. 2 zu entnehmen ist, ist oberhalb des Kühlkörpers 8 die Leistungsendstufe 11 der Leistungselektronik des Frequenzumrichters 7 innerhalb der Wärmesperre 10 angeordnet. Die Signalelektronik des Frequenzumrichters 7 ist entsprechend oberhalb des Zwischenteils 5 angeordnet.

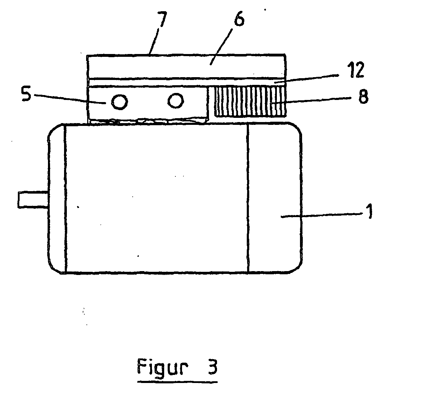

Bei der in Fig. 3 dargestellten Ausführungsform werden gleiche Bauteile mit gleichen Bezugszeichen versehen. Im Gegensatz zur vorangehenden Ausführungsform ist die Wärmesperre 12 zwischen dem Gehäuse 6 und dem Zwischenteil 5 sowie dem Kühlkörper 8 bei der in Fig. 3 dargestellten Ausführungsform einteilig ausgebildet. Durch diese Zusammenfassung kann ein besonders kostengünstiger Aufbau erreicht werden.

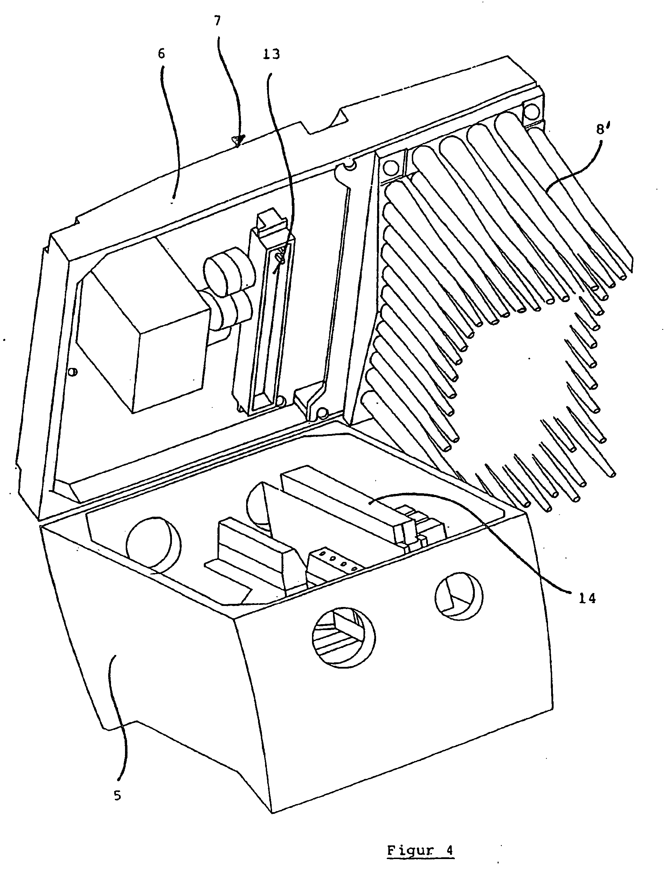

Bei dem in Fig. 4 dargestellten Ausführungsbeispiel ist der Deckel bzw. das Gehäuse 6 des Frequenzumrichters vom Zwischenteil 5 demontiert. Der Kühlkörper 8' wird hier bei diesem Ausführungsbeispiel zur Vergrößerung seiner Oberfläche durch eine Vielzahl von Kühlstäben gebildet.

Um eine elektrische Verbindung zwischen dem Frequenzumrichter 7 und dem Zwischenteil 5 zu schaffen, ist ein Steckverbinder 13, 14 vorgesehen. Der eine Teil 13 des Steckverbinders ist dabei fest mit dem Frequenzumrichter 7 verbunden und der andere Teil 14 fest mit dem Zwischenteil 5.

## Patentansprüche

1. Elektromotor mit einem Frequenzumrichter zur Drehzahlsteuerung, mit einem Gehäuse (5, 6), aus einem mit einem Motor (1) verbundenen und einen Klemmkasten ersetzenden Zwischenteil (5) und einem Deckteil (6), wobei das Gehäuse (5, 6) mit einem Kühlkörper (8) aus einem Material hoher thermischer Leitfähigkeit versehen ist, wobei der Frequenzumrichter im Deckteil angeordnet ist, wobei der Frequenzumrichter (7) mittels eines Steckverbinders (13, 14) elektrisch mit dem Anschlusselemente aufnehmenden Zwischenteil (5) verbunden ist, wobei zwischen dem den Frequenzumrichter (7) aufnehmenden Deckteil (6) und dem Zwischenteil (5) eine Wärmesperre (9) vorgesehen und/oder das Zwischenteil (5) als Wärmesperre ausgebildet ist, wobei die Signalelektronik des Frequenzumrichters (7) gegenüber dem Zwischenteil (5) angeordnet ist, wobei nur die Leistungselektronik (11) des Frequenzumrichters (7) wärmeleitend mit dem Kühlkörper (8) verbunden ist, und wobei das Deckteil (6) des Frequenzumrichters (7) das Zwischenteil (5) in Längsrichtung überragt und der Kühlkörper (8, 8') unterhalb des Deckteils (6) seitlich des Zwischenteils (5) angeordnet ist und die Leistungselektronik oberhalb des Kühlkörpers (8, 8') im Deckteil (6) angeordnet ist.

2. Elektromotor nach Anspruch 1,
**dadurch gekennzeichnet, dass**
der Kühlkörper (8) durch eine Vielzahl von Kühlrippen gebildet ist.

3. Elektromotor nach Anspruch 1,
**dadurch gekennzeichnet, dass**
der Kühlkörper (8') durch eine Vielzahl von Kühlstäben gebildet ist.

4. Elektromotor nach einem der Ansprüche 1 bis 3,
**dadurch gekennzeichnet, dass**
das Deckteil (6) des Gehäuses (5, 6) des Frequenzumrichters (7) aus einem Material hoher thermischer Leitfähigkeit ist.

5. Elektromotor nach Anspruch 4,
**dadurch gekennzeichnet, dass**
ein Steckverbindungsteil (13) des Steckverbinders (13, 14) fest mit dem Frequenzumrichter (7) und das andere (14) fest mit dem Zwischenteil (5) verbunden ist.

6. Elektromotor nach einem der Ansprüche 1-5,
**gekennzeichnet durch**
eine im Zwischenteil (5) vorgesehene Einrichtung zur Funkentstörung.

7. Elektromotor nach einem der Ansprüche 1-6,
**gekennzeichnet durch**
eine zwischen dem Deckteil (6) und dem Kühlkörper (8) vorgesehene Wärmesperre (9, 10, 12).

8. Elektromotor nach Anspruch 7,
**gekennzeichnet durch**
separate Wärmesperren (9, 10) zwischen dem Deckteil und dem Kühlkörper (8) einerseits und dem Zwischenteil (5) andererseits.

9. Elektromotor nach einem der Ansprüche 1-8,
**gekennzeichnet durch**
zumindest eine zwischen dem Deckteil und dem Kühlkörper (8) und/oder dem Zwischenteil (5) vorgesehene Feuchtigkeitssperre.

10. Elektromotor nach Anspruch 9,
**dadurch gekennzeichnet, dass**
die Wärmesperre (9, 10, 12) und Feuchtigkeitssperren eine Funktionseinheit bilden.

11. Elektromotor nach einem der Ansprüche 1-2 oder 10,
**dadurch gekennzeichnet, dass**
das Zwischenteil (5) aus einem Material geringer thermischer Leitfähigkeit ist.

12. Elektromotor nach einem der Ansprüche 1-8 oder 11,
**dadurch gekennzeichnet, dass**
das Deckteil (6) als Feuchtigkeitssperre ausgebildet ist.

13. Elektromotor nach einem der vorangehenden Ansprüche,
**dadurch gekennzeichnet, dass**
die Wärme- und/oder Feuchtigkeitssperren dichtend zwischen dem Deckteil (6) und dem Zwischenteil (5) bzw. Kühlkörper (7) angebracht werden.

14. Elektromotor nach einem der vorangehenden Ansprüche,
**dadurch gekennzeichnet, dass**
das Deckteil (6) auf das Zwischenteil (5) als Unterteil, dieses verschließend, aufgesetzt ist.

## Claims

1. An electric motor (1) with a frequency converter for speed control, having a housing (5,6), comprising an intermediate part (5) connected to the motor (1) and replacing a terminal box, and a cover part (6), wherein the housing (5,6) is provided with a cooling element (8) consisting of a material having high thermal conductivity, wherein the frequency converter is disposed in the cover part, wherein the frequency converter (7) is electrically connected by means of a plug-and-socket connector (13,14) to the intermediate part (5) accommodating connecting elements, wherein a heat barrier (9) is provided between the cover part (6) accommodating the frequency converter (7) and the intermediate part (5) and/or the intermediate part (5) is in the form of a heat barrier, wherein the signal electronics of the frequency converter (7) are disposed opposite the intermediate part (5), wherein only the power electronics (11) of the frequency converter (7) are connected in a heatconducting manner to the cooling element (8), and wherein the cover part (6) of the frequency converter (7) projects over the intermediate part (5) in a longitudinal direction and the cooling element (8,8') is disposed under the cover part (6) laterally of the intermediate part (5) and the power electronics are disposed above the cooling element (8,8') in the cover part (6).

2. An electric motor according to Claim 1, **characterised in that** the cooling element (8) formed by a plurality of cooling fins.

3. An electric motor according to Claim 1, **characterised in that** the cooling element (8') is formed by a plurality of cooling rods.

4. An electric motor according to any one of Claims 1 to 3, **characterised in that** the cover part (6) of the housing (5,6) of the frequency converter (7) consists of a material of high thermal conductivity.

5. An electric motor according to Claim 4, **characterised in that** one connector part (13) of the plug-and-socket connector (13,14) is securely connected to the frequency converter (7) and the other part (14) is securely connected to the intermediate part (5).

6. An electric motor according to any one of Claims 1-5, **characterised by** a noise suppression device provided in the intermediate part (5).

7. An electric motor according to any one of Claims 1-6, **characterised by** a heat barrier (9,10,12) provided between the cover part (6) and the cooling element (8).

8. An electric motor according to Claim 7, **characterised by** separate heat barriers (9,10) between the cover part and the cooling element (8), on the one hand, and the intermediate part (5), on the other hand.

9. An electric motor according to any one of Claims 1 - 8, **characterised by** at least one waterproofing means provided between the cover part and the cooling element (8) and/or the intermediate part (5).

10. An electric motor according to Claim 9, **characterised in that** the heat barrier (9,10,12) and waterproofing means form a subassembly.

11. An electric motor according to any one of Claims 1 - 2 or 10, **characterised in that** the intermediate part (5) consists of a material with low thermal conductivity.

12. An electric motor according to any one of Claims 1 - 8 or 11, **characterised in that** the cover part (6) is in the form of a waterproofing means.

13. An electric motor according to any one of the preceding Claims, **characterised in that** the heat barrier and/or waterproofing means is/are applied to form a seal between the cover part (6) and the intermediate part (5) or cooling element (8).

14. An electric motor according to any one of the preceding Claims, **characterised in that** the cover part (6) is mounted on the intermediate part (5) as a lower part so as to seal the latter.

## Revendications

1. Moteur électrique ayant un convertisseur de fréquence pour commander sa vitesse de rotation, avec un coffret (5, 6) formé d'une partie intermédiaire (5) reliée au moteur (1) et remplaçant une boîte de jonction et d'une partie (6) servant de capot, dans lequel le coffret (5, 6) est muni d'un dissipateur (8) de chaleur en un matériau de conductibilité thermique élevée, dans lequel le convertisseur de fréquence est dispose dans la partie servant de capot, dans lequel le convertisseur (7) de fréquence est relié électriquement au moyen d'un connecteur (13, 14) avec la partie intermédiaire (5) supportant des éléments de raccordement, dans lequel entre la partie (6) servant de capot supportant le convertisseur (7) de fréquence et la partie intermédiaire (5) est prévue une barrière thermique (9) et/ou la partie intermédiaire (5) est conçue comme une barrière thermique, dans lequel l'électronique de signaux du convertisseur (7) de fréquence est disposée en regard de la partie intermédiaire (5), dans lequel seule l'électronique (11) de puissance du convertisseur (7) de fréquence est reliée en conduction thermique avec le dissipateur (8) de chaleur, et dans lequel la partie (6) servant de capot du convertisseur (7) de fréquence dépasse de la partie intermédiaire (5) dans le sens longitudinal, et que le dissipateur (8, 8') de chaleur est disposé sous la partie (6) servant de capot à côté de la partie intermédiaire (5), et l'électronique de puissance est disposée dans la partie (6) servant de capot au-dessus du dissipateur (8, 8') de chaleur.

2. Moteur électrique selon la revendication 1, **caractérisé en ce que** le dissipateur (8) de chaleur est constitué d'une pluralité d'ailettes de refroidissement.

3. Moteur électrique selon la revendication 1, **caractérisé en ce que** le dissipateur (8') de chaleur est constitué d'une pluralité de colonnettes de refroidissement.

4. Moteur électrique selon l'une des revendications 1 à 3, **caractérisé en ce que** la partie (6) servant de capot du coffret (5, 6) du convertisseur (7) de fréquence est en un matériau de conductibilité thermique élevée.

5. Moteur électrique selon la revendication 4, **caractérisé en ce qu'**une partie (13) de connecteur du connecteur (13, 14) est liée de manière fixe au convertisseur (7) de fréquence et que l'autre (14) est liée de manière fixe à la partie intermédiaire (5).

6. Moteur électrique selon l'une des revendications 1-5, **caractérisé par** un dispositif d'antiparasitage prévu dans la partie intermédiaire (5).

7. Moteur électrique selon l'une des revendications 1 - 6, **caractérisé par** une barrière thermique (9, 10, 12) prévue entre la partie (6) servant de capot et le dissipateur (8) de chaleur.

8. Moteur électrique selon la revendication 7, **caractérisé par** des barriers thermiques séparées (9, 10) entre la partie (6) servant de capot et le dissipateur (8) de chaleur d'une part, et la partie intermédiaire (5) d'autre part.

9. Moteur électrique selon l'une des revendications 1 - 8, **caractérisé par** au moins une barrière contre l'humidité prévue entre la partie (6) servant de capot et le dissipateur (8) de chaleur et/ou la partie intermédiaire (5).

10. Moteur électrique selon la revendication 9, **caractérisé en ce que** la barrière thermique (9, 10, 12) et la barrière contre l'humidité constituent une unite fonctionnelle.

11. Moteur électrique selon l'une des revendications 1 - 2 ou 10, **caractérisé en ce que** la partie intermédiaire (5) est en un matériau de conductibilité thermique réduite.

12. Moteur électrique selon l'une des revendications 1 - 8 ou 11, **caractérisé en ce que** la partie (6) servant de capot est conçue pour servir de barrière contre l'humidité.

13. Moteur électrique selon l'une des revendications précédentes, **caractérisé en ce que** les barrières thermique et/ou contre l'humidité sont disposées de manière étanche entre la partie (6) servant de capot et la partie intermédiaire (5) ou le dissipateur (7) de chaleur.

14. Moteur électrique selon l'une des revendications précédentes, **caractérisé en ce que** la partie (6) servant de capot est disposée sur la partie intermédiaire (5) comme bâti pour la fermer.
